(19) Europäisches Patentamt
European Patent Office
Office européen des brevets

(11) Publication number: **0 683 201 A1**

# (12) EUROPEAN PATENT APPLICATION

(21) Application number: **94303608.7**

(22) Date of filing: **20.05.94**

(51) Int. Cl.[6]: **C08K 5/42**, C08L 67/02, C08G 63/688

(43) Date of publication of application:
**22.11.95 Bulletin 95/47**

(84) Designated Contracting States:
**DE FR GB**

(71) Applicant: **POLYPLASTICS CO. LTD.**
**3-13, Azuchicho, 2-chome**
**Chuo-Ku**
**Osaka-shi**
**Osaka 541 (JP)**

(72) Inventor: **Kawaguchi, Kuniaki**
**4-2, Higashimakado 2-chome**
**Numazu-shi,**
**Shizuoka (JP)**
Inventor: **Nakane, Toshio**
**885-11, Miyajima**
**Fuji-shi,**
**Shizuoka (JP)**
Inventor: **Hijikata, Kenji**
**8-8, Fujimidai**
**Mishima-shi,**
**Shizuoka (JP)**

(74) Representative: **Jackson, Peter**
**HYDE, HEIDE & O'DONNELL**
**10-12 Priests Bridge**
**London SW15 5JE (GB)**

## (54) Process for the preparation of modified polybutylene terephthalate resin.

(57) To provide a modified polybutylene terephthalate resin which is reduced in the amount of gas (such as tetrahydrofuran) generating in high-temperature service and in the amount of sublimate generating in a molten state.

A process for preparing a polyester by polycondensing an acid component comprising terephthalic acid or an ester thereof with a lower alcohol as a main component with a diol component comprising 1,4-butanediol as a main component through esterification or transesterification, wherein at least one specified sulfonic acid compound is added in an amount of 0.001 to 0.5 mole % based on the acid component prior to the completion of the polycondensation.

EP 0 683 201 A1

[Field of the Invention]

The present invention relates to a process for the preparation of a stable modified polybutylene terephthalate resin which is reduced in the amount of gas (such as tetrahydrofuran) generating in high-temperature service and in the amount of sublimate generating in melt-processing, and an article molded from a modified polybutylene terephthalate resin prepared by the process or a composition comprising the resin.

[Description of the Rerated Art]

Polybutylene terephthalate (hereinafter sometimes abbreviated to "PBT") is a crystalline thermoplastic resin excellent in mechanical, electrical, chemical and physical properties and so forth, and therefore has been used as an engineering plastic in various fields including automobile and electrical and electronic appliances. Further, PBT is also excellent in perfume retention and barrier properties against gas such as water vapor, and has been used favorably in the field of packaging as a case or wrapping film for food or cosmetics or the like.

However, PBT causes troubles in molding or processing. Specifically, when PBT is heated in a molten state, it decomposes to generate gas or sublimate, which causes void in the molded article or which adheres to a molding device such as a mold or a roll to stain or corrode the device. Further, in practical molding operation, the resin is not always molded continuously but sometimes interruptedly. In such interrupted operation, the resin remains in a molding machine in a molten state for a prolonged time, so that the above problem of generating gas or sublimate is particularly significant. Under these circumstances, the resin has been expected to be improved in this respect.

Further, an article molded from PBT also generates gas such as tetrahydrofuran in high-temperature service, so that an electrical or electronic component (such as relay, switch or connector) using such an article suffers from the staining or corrosion of its metal contact and that a PBT case or wrapping film for food, drink or cosmetics has a problem that the contents smell nasty or result in impaired flavor.

Under these circumstances, it has also been eagerly expected that the amount of gas generating from the molded article be reduced.

[Summary of the Invention]

In view of the above requirements, the present inventors have extensively studied to obtain a modified polybutylene terephthalate resin which is reduced in the amount of gas (such as tetrahydrofuran) generating particularly in high-temperature service and in the amount of sublimate generating in a molten state without any adverse effect on the excellent physical properties inherent in a PBT resin, and have accomplished the present invention.

[Detailed Description of the Invention]

Namely, the present invention relates to a process for the preparation of a modified polybutylene terephthalate resin by polycondensing an acid component comprising terephthalic acid or an ester thereof with a lower alcohol as a main component with a diol component comprising 1,4-butanediol as a main component through esterification or transesterification, characterized in that at least one compound selected from among those represented by the following general formulas (I) to (III) is added in an amount of 0.001 to 0.5 mole % based on the above acid component prior to the completion of the polycondensation, and an article molded from a modified PBT resin prepared by the process or a composition comprising the resin:

$$R^1\text{-}SO_3M \qquad (I)$$

$$\begin{array}{l} R^2\text{-}SO_3M \\ | \\ SO_3M \end{array} \qquad (II)$$

$$R^1\text{-}O\text{-}R^2\text{-}SO_3M \qquad (III)$$

wherein $R^1$ represents an alkyl group having 1 to 30 carbon atoms, an alkenyl group having 2 to 30 carbon atoms or an alkynyl group having 2 to 30 carbon atoms, which may be substituted by a hydroxyl group; $R^2$ represents an alkylene group having 1 to 30 carbon atoms, an alkenylene group having 2 to 30 carbon atoms or an alkynylene group having 2 to 30 carbon atoms, which may be substituted by a hydroxyl group; and M represents a group or element selected from among tetraalkylphosphonium and tetraalkylammonium groups and lithium, sodium, potassium, barium and calcium, both of the Ms in the formula (II) being either the same or different from each other.

The modified polybutylene terephthalate resin according to the present invention is one which mainly comprises butylene terephthalate units and which is prepared from an acid component comprising terephthalic acid or an ester thereof with a lower alcohol as a main component and a diol component comprising 1,4-butanediol as a main component, and includes homopolyesters and copolyesters.

In the preparation of the copolymer, one or more acid components other than the above acid components used as the main component may be additionally used as a comonomer, and examples of such acid components include conventional dicarboxylic acids and esters thereof with lower alcohols, such as 2,6-naphthalenedicarboxylic, 2,7-naphthalenedicarboxylic, diphenic, adipic, sebacic, dodecanedicarboxylic and 1,4-cyclohexanedicarboxylic acids and dimethyl esters of these acids. Further, one or more diol components other than the above diol components used as the main component may be additionally used as a comonomer, and examples of such diol components include conventional diols such as ethylene glycol, diethylene glycol, triethylene glycol, 1,3-propanediol, neopentyl glycol, 1,6-hexanediol, 1,10-decanediol, 1,4-cyclohexanediol, p-xylilene glycol, adduct of hydroquinone with alkylene oxide, adduct of 2,2-bis(4-hycroxyphenyl)propane with alkylene oxide, adduct of bis(4-hydroxyphenyl) sulfone with alkylene oxide and adduct of 2,6-dihydroxynaphthalene with ethylene oxide. Further, a halogenated derivative of the above comonomer component may also be used additionally as a comonomer to impart flame retardance to the resin. Furthermore, the preparation of the copolyester according to the present invention permits the use of an at least trifunctional compound such as trimethyl trimesate, trimethyl trimellitate, trimethylolpropane or pentaerythritol; a monofunctional compound such as stearyl alcohol, methyl o-benzoylbenzoate or an epoxy compound; a hydroxy carboxylic acid derivative such as methyl p-hydroxyethoxybenzenecarboxylate; or a polyalkylene glycol such as polypropylene glycol or polytetrahydrofuran in a small amount or together with the above comonomer component. The amount of the comonomer introduced is preferably at most 30 mole %, still preferably at most 20 mole % based on all the repeating ester units.

The preparation of a modified polybutylene terephthalate according to the present invention is characterized in that at least one compound selected from among those represented by the above general formulas (I) to (III) is added in an amount of 0.001 to 0-5 mole % based on the above acid component prior to the completion of the polycondensation.

Specific examples of the compound represented by the general formula (I) include tetrabutylphosphonium, tetrabutylammonium, lithium, sodium, potassium, barium and calcium salts of methanesulfonic, ethanesulfonic, propanesulfonic, butanesulfonic, pentanesulfonic, hexanesulfonic, heptanesulfonic, octanesulfonic, nonanesulfonic, decanesulfonic, dodecanesulfonic, 2-ethyl-2-hexanesulfonic, ethenesulfonic, 1-butene-4-sulfonic, 1-propyne-3-sulfonic, 1-butyne-4-sulfonic, hydroxymethanesulfonic, 1-hydroxy-2-ethanesulfonic and 1-hydroxy-12-dodecanesulfonic acids.

Specific examples of the compound represented by the general formula (II) include tetrabutylphosphonium, tetrabutylammonium, lithium, sodium, potassium, barium and calcium salts of 1,2-ethanedisulfonic, 1,4-ethanedisulfonic and 1,4-dihydroxybutane-1,4-disulfonic acids.

Specific examples of the compound represented by the general formula (III) include tetrabutylphosphonium, tetrabutylamtonium, lithium, sodium, potassium, barium and calcium salts of 3-propoxy-1-propanesulfonic, 4-(dodecyloxy)-1-butanesulfonic, 3-ethoxy-2-hydroxypropanesulfonic, 3-propoxy-2-hydroxydodecanesulfonic, 3-propynyloxypropanesulfonic and 3-(4'-hydroxy-2'-butynyloxy)propanesulfonic acids.

The sulfonic acid compounds represented by the general formulas (I) to (III) may be added at an arbitrary stage ranging from the compounding of the monomers to the completion of the polycondensation, if necessary, in several portions. In particular, it is preferable that the sulfonic acid compounds represented by the general formulas (I) to (III) be added to the starting monomers before the esterification (or transesterification) followed by polycondesation, or before the substantial completion of the esterification (or transesterification). Precisely, it is preferable that they be added to the feed monomers before the addition of a catalyst or that when the acid component used is of an ester type, they be added before at most 90 mole % of the theoretical amount of a lower alcohol formed by the transesterification of the ester with a diol component evaporates out of the reaction system, while when the acid component used is of a free acid type, they be added before at most 90 mole % of the theoretical amount of wager formed by the esterification of the acid with a diol component evaporates out of the reaction system. That is, the effect of

reducing the amount of gas (such as tetrahydrofuran) generating in high-temperature service of the molded article or the amount of sublimate generating in melt-processing is more remarkable, when the sulfonic acid compound is added at an earlier stage of the preparation of the polyester. On the contrary, when the sulfonic acid compound is mixed with the pelletized polyester on an extruder or the like, i.e., when it is added after the completion of the polycondensation, the effect is insufficient unfavorably.

Further, it is preferable that the sulfonic acid compound be added after being dissolved or suspended in 1,4-butanediol or the like.

The amount of the sulfonic acid compound added (or the total amount when two or more sulfonic acid compounds are used) is 0.001 to 0.5 mole %, preferably 0.01 to 0.3 mole % based on the acid monomer component. The addition thereof in an amount of less than 0.001 mole % is little effective in reducing the amount of gas (such as tetrahydrofuran) generating in high-temperature service of the molded article or the amount of sublimate generating in a molten state, while the addition thereof in an amount exceeding 0.5 mole % is unfavorable, because not only no additional effect will be attained, but also the sulfonic acid compound will remain in the resulting polymer in an undissolved state as foreign particles to impair the appearance and chemical strengths of the molded article.

When a lower alcohol ester of terephthalic acid is used as the acid component in the process of the present invention, the transesterification is conducted at a molar ratio of the ester to 1,4-butanediol of 1 : 1 to 1 : 2 under a normal pressure. Examples of the catalyst used for attaining a practical reaction rate include titanium compounds, tin compounds, lead oxide, lead acetate, zinc acetate, zinc oxide and manganese acetate, among which organotitanate compounds, titanium tetrachloride compound, hydrolyzates and alcoholyzates of them, tin oxide, tin acetate and organotin compounds are suitable. Specific examples of the catalyst include titanium compounds known as a catalyst for the preparation of polyester, such as tetrabutyl titanate, tetrapropyl titanate, tetraethyl titanate, tetramethyl titanate and hydrolyzates of these titanates; hydrolyzates of titanium tetrachloride and titanium sulfate; inorganic titanium compounds, e.g., potassium fluorotitanabe, zinc fluorotitanate and cobalt fluorotitanate; and titanium oxalate and titanium potassium oxalate; and tin compounds known as a catalyst for the preparation of polyester, such as dibutyltin oxide, dibutyltin acetate, dioctyltin diacetate, diphenyltin dilaurylmercaptide, polydibutyltin sebacate, dibutyltin ethylene glycolate, dioctyltin thiosalicylate, diphenyltin benzenesulfonate and dimethyltin p-toluenesulfonate. Particularly preferable examples thereof include tetrabutyl titanate, tetrapropyl titanate, hydrolyzate of titanium tetrachloride, dibutyltin oxide, dibutyltin acetate and dioctyltin diacetate.

When the above titanium compound, the above tin compound or a mixture of both is used as the catalyst, the amount of the catalyst is preferably 10 to 1200 ppm, still preferably 30 to 1000 ppm in terms of titanium or tin (in total when the mixture is used) based on the polymer, which may be added in several portions during the reaction, if necessary. After the addition of the catalyst, the reaction system may be heated up to 230 °C, while continuously removing a formed lower alcohol (such as methanol).

On the other hand, when terephthalic acid is used as the main acid component, the esterification is conducted at a molar ratio of 1,4-butanediol to terephthalic acid of 1 : 1 to 5 : 1 under a normal or elevated pressure in the presence of the above titanium or tin esterification catalyst while removing formed water continuously. If necessary, the esterification catalyst may be added in several portions during the reaction. After the addition of the catalyst, the reaction temperature can be raised up to 250 °C.

The polycondensation is conducted by melt-polymerizing the product of the above transesterification or esterification until a predetermined degree of polymerization at 190 to 270 °C while removing excess 1,4-butanediol and a by-product continuously by evacuating the reaction system. In the polycondensation, the catalyst used in the above transesterification or esterification can be used as such to attain a practical reaction rate, though one or more catalysts selected from among those described above may be additionally added prior to the initiation of the polycondensation to enhance the polymerization rate. Further, a conventional stabilizer such as a sterically hindered phenol or a phosphorus compound may be added in the step of compounding the monomers or the polymerization step. The sulfonic acid compound according to the present invention neither exerts any adverse effect on the polymerization rate, nor hinders the polymerization, so far as it is used in an amount specified in the present invention.

The modified polybutylene terephthalate prepared by the melt polymerization according to the present invention is one exhibiting an intrinsic viscosity of 0.5 to 1.2 in o-chlorophenol at 25 °C, which is then solidified by cooling and thereafter pulverized or pelletized. Alternatively, the modified polybutylene terephthalate may be subjected to solid phase polymerization according to its use wherein a high degree of polymerization is required. The solid phase polymerization may be conducted in the conventional manner and the degree of polymerization can be controlled by selecting residence time, treatment time or the like.

The modified polybutylene terephthalate resin according to the present invention may be used, if necessary, as a composition thereof with one or more members selected from among other thermoplastic

resins, additivies, organic and inorganic fillers and so forth, which are each added during or after the polymerization. Examples of the thermoplastic resins include polyester elastomers, polyester resins other than those of the present invention, polyolefin resins, polystyrene resins, polyamide resins, polycarbonate, polyacetal, polyarylene oxide, polyarylene sulfide and fluororesins; those of the additives include conventional stabilizers such as ultraviolet absorber and antioxidant, antistatic agent, flame retardant, auxiliary flame retardant, coloring agents such as dye and pigment, lubricant, plasticizer, slip additive, mold release agent and nucleating agent; those of the inorganic fillers include glass fiber, milled glass fiber, glass bead, glass flake, silica, alumina fiber, zirconia fiber, potassium titanate fiber, carbon fiber, carbon black, graphite, silicates such as calcium silicate, aluminum silicate, kaolin, talc and clay; metal oxides such as iron oxide, titanium oxide, zinc oxide, antimony oxide and alumina; carbonates and sulfates of metals such as calcium, magnesium and zinc; and silicon carbide, silicon nitride and boron nitride; and those of the organic fillers include fibers of high-melting aromatic polyester, liquid-crystal polyester, aromatic polyamide, fluororesin and polyimide.

When the modified polybutylene terephthalate resin is molded and used as a member constituting an electrical or electronic component or an automobile part, the member is often required to be excellent in flame retardance depending upon the service conditions of the component or part. In such a case, the addition of a flame retardant and an auxiliary flame retardant to the resin is essential. The flame retardant usable in this case includes halogen-containing compounds known as flame retardants, e.g., brominated polycarbonate, brominated epoxy compounds, brominated diphenyl and brominated dipheny ether, while the auxiliary flame retardant usable in this case includes antimony compounds such as antimony trioxide, antimony pentaoxide and antimony halides; compounds containing metal such as zinc and bismuth; magnesium hydroxide and clayey silicates such as asbestos. Further, the use of a stabilizer such as antioxidant in a suitable amount is effective in enhancing the effect of the present invention favorably.

The modified PBT resin of the present invention and a composition comprising said resin can be molded by various means such as injection, extrusion, blow molding, compression molding or vacuum forming into various molded parts, film and sheet, which are used in various fields.

The modified polybutylene terephthalate resin prepared by the process of the present invention is excellent in material properties, particularly stability in melt processing, so that it little generates sublimate due to decomposition, and little generates gag such as tetrahydrofuran in high-temperature service. Accordingly, when the resin is used as a member constituting an electrical or electronic component such as relay, switch or connector, the metal part of the component is free from staining or corrosion, while when it is used as a case or wrapping film for food or cosmetics, the contents are little contaminated favorably.

[Example]

The present invention will now be described more specifically, though the present invention is not limited to them.

The characteristics of the resins prepared in the Examples were evaluated as follows:

(1) Determination of the type and amount of gas generated

Each resin was molded into an ASTM No.1 tensile test piece on an injection molding machine under predetermined conditions and pulverized into particles having a predetermined size. The particles were used as a sample. 5 g of this sample was weighed out and allowed to stand in a 20-ml head space at 140 °C for 2 hours. The gas generating from the sample was analyzed by gas chromatography under the following conditions and the weight of the gas was expressed in ppm based on the weight of the sample:

equipment: Yokogawa-Hewlett-Packard, Ltd. HP5890A

column: HR-1701, 0.32 mm(diam) × 30 m

column temp.: 50 °C (1 min) → 5 °C/min - 250 °C (1 min)

detector: FID

(2) Determination of melt-heating loss

A sample (10 mg) was prepared by cutting a pellet of each resin and heated in a thermogravimeter (mfd. by Perkin Elmer TGA-7) at 260 °C in a molten state in an atmosphere of flowing nitrogen to determine the weight loss for a period of 10 minutes, i.e., from 5 till 15 minutes after the completon of melting.

(3) Evaluation of mechanical strength

Each resin was examined for Izod impact strength (notched) according to ASTM D 256.

Examples 1 to 3 and Comparative Examples 1 and 2

A reactor fitted with a stirrer and a distilling column was filly purged with nitrogen. 246 parts by weight of dimethyl terephthalate (DMT), 145 parts by weight of 1,4-butanediol (1,4 BD), the compound (I-a) which will be described below in an amount specified in Table 1 and 0.16 part by weight of titanium tetrabutoxide as a catalyst were fed into the reactor to conduct transesterification. The temperature of the reaction system was gradually raised to distill off methanol formed as a by-product. At the point of time when the amount of methanol distilled off exceeded 88% by weight of the theoretical amount, the reaction system was heated to 200 °C and transferred to another reactor. The resulting system was evacuated to 0.5 Torr in one hour, while the temperature of the reaction mixture was raised to 250 °C. The resulting mixture was stirred in this state for 1.5 hours and the melt was extruded into a strand through a discharge orifice. This strand was cooled with water and passed through hot air to be freed from adhering water, followed by pelletization. Thus, a pelletized modified PBT resin was obtained.

(I-a) $HO\text{-}CH_2\text{-}CH_2\text{-}SO_3Na$

The intrinsic viscosity of the obtained polyester was determined in o-chlorophenol at 25 °C and the polyester was further evaluated for the above characteristics. The generation of 1-butene, tetrahydrofuran, 3-buten-1-ol and so forth was observed. The results are given in the Table 1. Further, polyester resins for comparison were also prepared without the addition of any sulfonic acid compound (Comparative Example 1) or with the addition of the compound (I-a) in an amount outside the scope of the present invention (Comparative Example 2), and evaluated in the same manners as those described above. The results are given in the Table 1. Incidentally, white fine particles were observed in the polyester prepared in the Comparative Example 2.

Examples 4 to 6 and Comparative Examples 3 and 4

Modified PBT resins were prepared by conducting melt polymerization in the same manner as that of the Example 2 except that a predetermined amount (0.1 mole % based on DMT) of the compound (I-b), (II-c) or (III-d) which will be described below was used instead of the compound (I-a). The results are given in Table 2. Further, modified polyester resins for comparison were also prepared by using the compound (e) or (f) which will be described below and which is different from those represented by the general formulas (I) to (III) in the structure, and evaluated in the same manners as those described above. The results are also given in the Table 2.

(I-b)

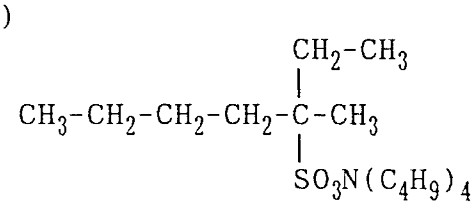

(II-c)

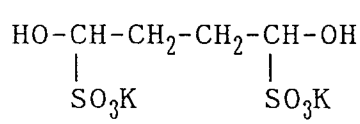

(II-d) $HC{\equiv}C\text{-}CH_2\text{-}O\text{-}CH_2\text{-}CH_2\text{-}CH_2\text{-}SO_3P(C_4H_9)_4$

(e)

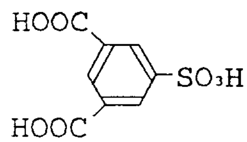

(f)

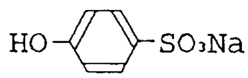

Examples 7 and 8 and Comparative Example 5

Modified polyester resins were prepared under the same conditions as those described in the Example 2 except that the compound (I-a) was added at a stage different from that of the Example 2. The results of evaluation of the resins are given in Table 3.

Examples 9 and 10 and Comparative Examples 6 and 7

Copolyesters were prepared by conducting melt-polymerization in the same manner as that of the Example 2 except that part (10 mole %) of the DMT was replaced by dimethyl isophthalate (DMI) (Example 9) or that part (2.5 mole %) of the 1,4 BD was replaced by 2,2-bis[3,5-dibromo-4-(2-hydroxyethoxy)phenyl]-propane (BrEBPA) (Example 10). The results are given in Table 4. Further, copolyesters for comparison were also prepared in the same manner as that of Example 9 or 10 except that no sulfonic acid compound was added at all (Comparative Examples 6 and 7). The results of evaluation of the copolyesters are given in the Table 4.

Table 1

| | Sulfonic acid compd. | | Intrinsic viscosity | Amt. of gas generated (ppm) | | | | Melt-heating loss | Izod impact strength |
|---|---|---|---|---|---|---|---|---|---|
| | type | amt. (mole % based on DMT) | (dl/g) | 1-butene | tetrahydrofuran | 3-buten-1-ol | In total | (%) | (kgf·cm/cm) |
| Comp. Ex. 1 | – | – | 0.77 | 0.10 | 192.21 | 0.82 | 195.37 | 0.097 | 2.7 |
| Ex. 1 | I-a | 0.05 | 0.77 | 0.05 | 52.43 | 0.71 | 54.01 | 0.069 | 2.8 |
| Ex. 2 | I-a | 0.1 | 0.77 | 0.05 | 49.19 | 0.72 | 51.68 | 0.068 | 2.7 |
| Ex. 3 | I-a | 0.3 | 0.78 | 0.06 | 44.33 | 0.71 | 46.29 | 0.068 | 2.7 |
| Comp. Ex. 2* | I-a | 0.8 | 0.78 | 0.06 | 47.86 | 0.72 | 49.99 | 0.068 | 1.9 |

* white foreign particle was observed

Table 2

| | Sulfonic acid compd. | | Intrinsic viscosity | Amt. of gas generated (ppm) | | | | Melt-heating loss | Izod impact strength |
|---|---|---|---|---|---|---|---|---|---|
| | type | amt. (mole % based on DMT) | (dl/g) | 1-butene | tetrahydrofuran | 3-buten-1-ol | In total | (%) | (kgf·cm/cm) |
| Ex. 2 | I-a | 0.1 | 0.77 | 0.05 | 49.19 | 0.72 | 51.68 | 0.068 | 2.7 |
| Ex. 4 | I-b | 0.1 | 0.78 | 0.05 | 44.08 | 0.75 | 46.11 | 0.066 | 2.7 |
| Ex. 5 | II-c | 0.1 | 0.78 | 0.06 | 47.30 | 0.72 | 49.09 | 0.068 | 2.8 |
| Ex. 6 | III-d | 0.1 | 0.78 | 0.05 | 46.21 | 0.74 | 48.12 | 0.067 | 2.7 |
| Comp. Ex. 3 | e | 0.1 | 0.79 | 0.10 | 198.88 | 0.82 | 201.43 | 0.099 | 2.2 |
| Comp. Ex. 4 | f | 0.1 | 0.76 | 0.12 | 233.00 | 0.82 | 243.16 | 0.111 | 2.6 |

Table 3

| | Timing of addn. of 1-a | Intrinsic viscosity (dl/g) | Amt. of gas generated (ppm) | | | | Melt-heating loss (%) | Izod impact strength (kgf·cm/cm) |
|---|---|---|---|---|---|---|---|---|
| | | | 1-butene | tetrahydrofuran | 3-buten-1-ol | in total | | |
| Ex. 2 | in compounding monomers | 0.77 | 0.05 | 49.19 | 0.72 | 51.68 | 0.068 | 2.7 |
| Ex. 7 | during transesterification (amt. of methanol distilled out: 75%) | 0.77 | 0.06 | 57.73 | 0.72 | 59.19 | 0.071 | 2.7 |
| Ex. 8 | in the final stage of polycondensation (10 min before discharge) | 0.77 | 0.07 | 84.68 | 0.73 | 86.91 | 0.078 | 2.5 |
| Comp. Ex. 5* | kneaded with pelletized PBT (Comp. Ex. 1) on an extruder | 0.76 | 0.07 | 149.01 | 0.75 | 151.22 | 0.090 | 1.7 |

* white foreign particle was observed

Table 4

| | Comonomer | | Sulfonic acid compd. | | Intrinsic viscosity | Amt. of gas generated (ppm) | | | | Melt-heating loss |
|---|---|---|---|---|---|---|---|---|---|---|
| | type | amt. (mole %) | type | amt. (mole %) | (dl/g) | 1-butene | tetrahydrofuran | 3-buten-1-ol | In total | (%) |
| Ex. 9 | DMI*1 | 10 | I-a | 0.1 | 0.75 | 0.12 | 56.44 | 0.81 | 59.64 | 0.072 |
| Comp. Ex. 6 | DMI | 10 | - | - | 0.75 | 0.12 | 205.41 | 0.91 | 208.43 | 0.101 |
| Ex. 10 | BrEBPA*2 | 2.5 | I-a | 0.1 | 0.73 | 0.14 | 59.03 | 0.81 | 64.00 | 0.074 |
| Ex. 7 | BrEBPA | 2.5 | - | - | 0.73 | 0.15 | 222.72 | 0.91 | 264.33 | 0.119 |

*1 dimethyl isophthalate

*2 2,2-bis[3,5-dibromo-4-(2-hydroxyethoxy)phenyl]propane

## Claims

**1.** A process for the preparation of a modified polybutylene terephthalate resin by polycondensing an acid component comprising terephthalic acid or an ester thereof with a lower alcohol as a main component

with a diol component comprising 1,4-butanediol as a main component through esterification or transesterification, characterized in that at least one compound selected from among those represented by the following general formulas (I) to (III) is added in an amount of 0.001 to 0.5 mole % based on the above acid component prior to the completion of the polycondensation:

$R^1\text{-}SO_3M$ (I)

$$\begin{matrix} R^2\text{-}SO_3M \\ | \\ SO_3M \end{matrix} \qquad (II)$$

$R^1\text{-}O\text{-}R^2\text{-}SO_3M$ (III)

wherein $R^1$ represents an alkyl group having 1 to 30 carbon atoms, an alkenyl group having 2 to 30 carbon atoms or an alkynyl group having 2 to 30 carbon atoms, which may be substituted by a hydroxyl group; $R^2$ represents an alkylene group having 1 to 30 carbon atoms, an alkenylene group having 2 to 30 carbon atoms or an alkynylene group having 2 to 30 carbon atoms, which may be substituted by a hydroxyl group; and M represents a group or element selected from among tetraalkylphosphonium and tetraalkylammonium groups and lithium, sodium, potassium, barium and calcium, both of the Ms in the formula (II) being either the same or different from each other.

**2.** A process for the preparation of a modified polybutylene terephthalate resin as set forth in claim 1, wherein the compound represented by the general formula (I), (II) or (III) is added before at most 90 mole % of the theoretical amount of water or a lower alcohol formed by the esterification or transesterification evaporates out of the reaction system.

**3.** An article molded from a modified polybutylene terephthalate resin prepared by the process as set forth in claim 1 or a composition comprising the resin.

European Patent Office

# EUROPEAN SEARCH REPORT

Application Number
EP 94 30 3608

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR-A-1 496 659 (SNIA VISCOSA)<br>* the whole document *<br>--- | 1-3 | C08K5/42<br>C08L67/02<br>C08G63/688 |
| A | DE-A-19 33 969 (FARBWERKE HOECHST AG)<br>* claim 1; example 1 *<br>--- | 1-3 | |
| A | DE-A-24 26 400 (BAYER AG)<br>* claims 1-4 *<br>--- | 1-3 | |
| A | CHEMICAL ABSTRACTS, vol. 82, no. 20, 19 May 1975, Columbus, Ohio, US;<br>abstract no. 126021u,<br>MATSUI, HIDEO ET AL 'Polyesters for moldings'<br>page 32 ;<br>* abstract *<br>& JP-A-74 132 191 (TEIJIN)<br>--- | 1-3 | |
| A | EP-A-0 357 896 (GENERAL ELECTRIC COMPANY)<br>* claims 1-7 *<br>--- | 1-3 | TECHNICAL FIELDS SEARCHED (Int.Cl.6) |
| A | EP-A-0 185 555 (POLYPLASTICS CO. LTD.)<br>----- | | C08K<br>C08G |

The present search report has been drawn up for all claims

| Place of search | Date of completion of the search | Examiner |
|---|---|---|
| THE HAGUE | 19 October 1994 | Decocker, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)